(19) Europäisches Patentamt
European Patent Office
Office européen des brevets

(11) **EP 2 818 891 B1**

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(51) Int Cl.:
*G01S 7/35* (2006.01)  *G01S 13/02* (2006.01)
*G01S 13/34* (2006.01)  *G01S 13/93* (2006.01)

(21) Anmeldenummer: **14167369.9**

(22) Anmeldetag: **07.05.2014**

(54) **Radarsensor und Verfahren zum Betrieb eines Radarsensors**

Radar sensor and method for operation of a radar sensor

Capteur radar et procédé de fonctionnement d'un capteur de radar

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2013 DE 102013212664**

(43) Veröffentlichungstag der Anmeldung:
**31.12.2014 Patentblatt 2015/01**

(73) Patentinhaber: **ROBERT BOSCH GMBH**
**70442 Stuttgart (DE)**

(72) Erfinder:
• Kuehnle, Goetz
  71282 Hemmingen (DE)
• Bi, Jingying
  71229 Leonberg (DE)

(56) Entgegenhaltungen:
DE-A1-102006 020 943    DE-A1-102009 057 191
JP-A- 2004 151 022    US-A- 4 302 758
US-A1- 2012 092 209

**Beschreibung**

Die vorliegende Erfindung betrifft einen Radarsensor und ein Verfahren zum Betrieb eines Radarsensors. Insbesondere betrifft die vorliegende Erfindung einen Radarsensor mit Rapid-Chirp-Radarsignalen.

Stand der Technik

Moderne Kraftfahrzeuge verfügen zunehmend über Fahrassistenzsysteme, die einen Fahrzeugführer beim Führen des Kraftfahrzeuges unterstützen sollen. Beispielsweise können solche Fahrassistenzsysteme dem Fahrzeugführer während des Einparkens über ein Hindernis informieren. Darüber hinaus können Fahrassistenzsysteme auch den Fahrzeugführer während der Fahrt unterstützen, indem sie beispielsweise ein Hindernis im Fahrweg des Kraftfahrzeuges erkennen und daraufhin dieses mögliche Gefahrenpotential dem Fahrzeugführer signalisieren oder gegebenenfalls sogar aktiv in das Fahrverhalten des Kraftfahrzeuges eingreifen.

Aufgrund des geringen Hardwareaufwands und der geringen Rechenkomplexität wird bisher im Automobilbereich sehr häufig eine LFMCW-Modulation (Linear Frequency Modulated Continuous Wave) der Radarsignale verwendet. Bei der Ermittlung von Entfernung X und Relativgeschwindigkeit v eines Objektes werden jedoch bei diesem Verfahren alle Ziele auf einer Geraden im X-v Raum auf eine einzelne Frequenz abgebildet. Diese Mehrdeutigkeit kann teilweise dadurch gelöst werden, dass die Raumpunkte mehrerer LFMCW-Rampen mit unterschiedlichen Rampensteigerungen in Kombination mit einem Matching-Verfahren aufgelöst werden. Ein Verfahren zur Bestimmung von Entfernung und/oder relativen Geschwindigkeit mittels eines LFMCW-Radargerätes ist beispielsweise in der Druckschrift DE 10 2009 057 191 A1 offenbart.

Weitere FMCW-Radarverfahren sind aus den Druckschriften DE 10 2006 020943 A1, JP 2004 151022 A, US 2012/092209 A1 sowie US 4 302 758 A bekannt.

Eine Alternative zur LFMCW-Modulation bietet beispielsweise die Rapid-Chirp-Sequence-Modulation. Dabei werden nacheinander sehr kurze Frequenzrampen ausgesendet. Typischerweise liegt die Dauer einer Frequenzrampe im Bereich von etwa 10 $\mu$s bis einigen wenigen 10 $\mu$s. Der Abstand zwischen den einzelnen Frequenzrampen beträgt dabei nur wenige Mikrosekunden. Diese Rapid-Chirp-Sequence-Modulation erlaubt aufgrund von sehr kurzen Frequenzrampen eine gute Trennung der Ziele allein anhand unterschiedlicher Entfernungen X und Relativgeschwindigkeiten v. Die Entfernungsschätzung wird dabei unabhängig von der Relativgeschwindigkeitsschätzung durchgeführt. Daher existieren bei der Rapid-Chirp-Sequence-Modulation im Gegensatz zur LFMCW-Modulation keine Mehrdeutigkeiten aufgrund von Überlagerungen der Entfernung und der Relativgeschwindigkeit. Für die digitale Weiterverarbeitung ist es erforderlich, die Radarsignale und die von dem Radarsystem empfangenen Radarechos in Digitalsignale umzuwandeln. Für einen großen Eindeutigkeitsbereich in Entfernung ist eine hohe Abtastrate für die Digitalisierung der Radarsignale und der empfangenen Radarechos erforderlich. Aufgrund der vorgegebenen sehr kurzen Rampendauer der ausgesendeten Frequenzrampen ist die hohe Abtastrate erst durch eine große Anzahl der Abtastwerte (Samples) möglich. Darüber hinaus hängen die Eindeutigkeit und die Trennfähigkeit für die Detektion von Objekten in Radialgeschwindigkeit von der Anzahl der Frequenzrampen und dem Zeitunterschied zwischen aufeinanderfolgenden Frequenzrampen ab. Kurz gefasst sind die Systemanforderungen bzgl. der Eindeutigkeit und der Trennfähigkeit durch die Anforderung an die Hardware, wie zum Beispiel Abtastrate, Speicherkapazität, Datenübertragungsrate und Rechenkomplexität beschränkt. Im Automobilbereich stehen vor allem geringe Hardwarekosten und kurze Signalverarbeitungsdauern stark im Vordergrund. Es besteht daher Bedarf nach einem effizienten Rapid-Chirp-Radarsystem mit einem großen Eindeutigkeitsbereich und zugleich einer guten Trennfähigkeit.

Offenbarung der Erfindung

Gemäß einem Aspekt schafft die vorliegende Erfindung einen Radarsensor mit einer Sende-/Empfangseinheit, die dazu ausgebildet ist, eine Sequenz modulierter Rapid-Chirp-Radarsignale auszusenden und die Radarechos der ausgesendeten Rapid-Chirp-Radarsignale zu empfangen, die von Objekten reflektiert werden; und einer Abtastvorrichtung, die dazu ausgelegt ist, die empfangenen Radarechos mit einer Abtastfrequenz abzutasten; wobei die ausgesendeten Rapid-Chirp-Radarsignale eine Mehrzahl von Rampensätzen umfassen; jeder Rampensatz eine Mehrzahl von Frequenzrampen aufweist; jede Frequenzrampe eines Rampensatzes eine Rampendauer und einen Frequenzhub aufweist; und zwei Frequenzrampen einen Zeitunterschied aufweisen; sich zwei aufeinanderfolgende Rampensätze zumindest in der Rampendauer unterscheiden; und wobei die Abtastvorrichtung (30) die Abtastfrequenz für jeden Rampensatz variiert.

Gemäß einem weiteren Aspekt schafft die vorliegende Erfindung ein Verfahren zum Betrieb eines Radarsensors mit den Schritten des Aussendens von Rapid-Chirp-Radarsignalen; des Empfangens von Radarechos der ausgesendeten Rapid-Chirp-Radarsignalen, die von Objekten reflektiert werden; und dem Erfassens der empfangenen Radarechos mit einer vorgegebenen Abtastfrequenz; wobei die ausgesendeten Rapid-Chirp-Radarsignale eine Mehrzahl von Rampensätzen umfassen; jeder Rampensatz eine Mehrzahl von Frequenzrampen aufweist; jede Frequenzrampe eines Rampensatzes eine Rampendauer und einen Frequenzhub aufweist; und zwei aufeinanderfolgende Frequenzrampen einen Zeitunterschied aufweisen; und wobei sich zwei Rampensätze zumindest in der Rampendauer unterscheiden; und wobei die vorgegebene Abtastfrequenz für jeden Rampensatz variiert wird.

Es ist eine Idee der vorliegenden Erfindung, einen Radarsensor auf Basis von modulierten Rapid-Chirp-Radarsignalen mit mehreren Folgen von Frequenzrampen zu betreiben, wobei sich die einzelnen Folgen der Frequenzrampen in einem charakteristischen Parameter, wie beispielsweise der Rampendauer unterscheiden. Für jeden dieser Rampensätze mit individuellen charakteristischen Parametern kann der Radarsensor eine separate Schätzung von Entfernung und Relativgeschwindigkeit durchführen. Ferner ist es eine Idee der vorliegenden Erfindung, dabei die Abtastfrequenz für die Erfassung der Radarsignale in Abhängigkeit der Parametervariation anzupassen.

Ein wesentlicher Vorteil der vorliegenden Erfindung besteht darin, dass durch die kombinierte Auswertung der Detektionsergebnisse von Entfernung und/oder Relativgeschwindigkeit für jeden der Rampensätze die Trennfähigkeit und Eindeutigkeit des Radarsystems verbessert werden kann.

Die Verbesserung und Erhöhung der Trennfähigkeit und Eindeutigkeit durch das erfindungsgemäße Verfahren führt darüber hinaus vorteilhaft dazu, dass Systemanforderungen an eine Trennfähigkeit und große Eindeutigkeit auch bei relativ geringen Abtastraten für die Digitalisierung der Radarsignale und der Radarechos während der Weiterverarbeitung und/oder mit einer relativ geringen Anzahl von Rampen in den Radarsignalen erfüllt werden. Diese Möglichkeit der Reduktion der Abtastraten bei der Digitalisierung und/oder der Anzahl von Rampen ermöglicht die Konzeption von preisgünstigen und sehr schnellen Radarsystemen, wie sie insbesondere im Bereich von Kraftfahrzeugen besonders vorteilhaft ist.

Ein weiterer Vorteil besteht darin, dass durch die Anpassung der Abtastfrequenz stets eine Anzahl von Abtastwerten bereitgestellt wird, die eine effiziente Weiterverarbeitung der abgetasteten Signale ermöglicht.

Gemäß einer Ausführungsform wird die Abtastfrequenz in Abhängigkeit der Rampendauer angepasst. Hierdurch kann die Anzahl der erfassten Abtastwerte gesteuert werden und somit die Effizienz der Weiterverarbeitung gesteigert werden.

In einer speziellen Ausführungsform wird das Radarecho jeder ausgesendeten Frequenzrampe mit einer gleichen Anzahl von Abtastwerten erfasst. Durch eine stets konstante Anzahl von Abtastwerten kann eine besonders effiziente Weiterverarbeitung in dem Radarsensor erreicht werden.

In einer weiteren Ausführungsform weist der Radarsensor einen Eindeutigkeitsbereich auf, der bis zum kleinsten gemeinsamen Vielfachen aller Eindeutigkeitsbereiche der einzelnen Rampensätze erweitert.

Gemäß einer Ausführungsform umfassen die ausgesendeten Rapid-Chirp-Radarsignale eine Mehrzahl von nacheinander ausgesendeten Rampensätzen.

In einer alternativen Ausführungsform umfassen die ausgesendeten Rapid-Chirp-Radarsignale eine Mehrzahl von ineinander verschachtelten Rampensätzen. Bei solchen ineinander verschachtelten Rampensätzen werden nacheinander zunächst jeweils die ersten Frequenzrampen jedes Rampensatzes ausgesendet, daraufhin die zweiten Frequenzrampen jedes Rampensatzes, usw. Da bei einer solchen Verschachtelung der einzelnen Rampensätze jeweils Frequenzrampen der unterschiedlichen Rampensätze sehr dicht beieinander liegen, ergibt sich somit insbesondere bei beweglichen Objekten mit einer großen Relativgeschwindigkeit zu dem Radarsensor ein verbessertes Detektionsverhalten.

Gemäß noch einer weiteren Ausführungsform der vorliegenden Erfindung werden die Unterschiede der Rampendauern, in denen sich die einzelnen Rampensätze unterscheiden, dynamisch angepasst. Auf diese Weise kann das Radarsystem sich jeweils den aktuellen Rahmenbedingungen sehr gut anpassen. Somit kann beispielsweise insbesondere bei einem stehenden, oder sich nur sehr langsam bewegenden Fahrzeug, eine andere Konfiguration eingestellt werden, als dies bei einem sich schnell bewegenden Fahrzeug erforderlich wäre. Auf diese Weise kann beispielsweise das Radarsystem während eines Einparkvorgangs mit einem kleineren Eindeutigkeitsbereich betrieben werden und während einer schnellen Fahrt kann der Eindeutigkeitsbereich erweitert werden.

Gemäß einer weiteren Ausführungsform weist die Sequenz der modulierten Rapid-Chirp-Radarsignale eine Rampendauer von weniger 25 µs, vorzugsweise nicht mehr als 10 µs auf. Solche sehr schnellen modulierten Rapid-Chirp-Radarsignale sind für eine Trennung der Entfernungsschätzung und der Schätzung der Relativgeschwindigkeit insbesondere für Fahrassistenzsysteme von Kraftfahrzeugen sehr gut geeignet.

Die vorliegende Erfindung umfasst ferner ein Fahrassistenzsystem, das einen erfindungsgemäßen Radarsensor aufweist.

Ferner umfasst die vorliegende Erfindung ein Kraftfahrzeug mit einem Fahrassistenzsystem, das einen erfindungsgemäßen Radarsensor aufweist.

Gemäß einer weiteren Ausführungsform umfasst das erfindungsgemäße Verfahren die Schritte des Berechnens eines separaten Spektrums der erfassten Radarechos für jeden der Mehrzahl von Rampensätzen; des Erstellens einer periodischen Fortsetzung der berechneten Spektren in Dimension der Entfernung und/oder Geschwindigkeit; und des Ermittelns einer Übereinstimmung eines detektierten Objekts in den periodischen Fortsetzungen der berechneten Spektren.

In einer speziellen Ausführungsform erweitert der Schritt zur Erstellung der periodischen Fortsetzungen die berechneten Spektren bis zum kleinsten gemeinsamen Vielfachen der Eindeutigkeitsbereiche der Rampensätze.

Gemäß einer weiteren Ausführungsform bildet der Schritt des Ermittelns einer Übereinstimmung einer Kostenfunktion und Bestimmung eines Minimums der Kostenfunktion. Dies ermöglicht eine effiziente und robuste Entfernungsschätzung.

Weitere Merkmale und Vorteile von Ausführungsformen der Erfindung ergeben sich aus der nachfolgenden Beschreibung in Bezug auf die beigefügten Zeichnungen.

Kurze Beschreibung der Zeichnungen

Es zeigen:

Figur 1: eine schematische Darstellung eines Radarsystems gemäß einer Ausführungsform der vorliegenden Erfindung;

Figur 2: eine schematische Darstellung eines Rampensatzes mit modulierten Rapid-Chirp-Radarsignalen gemäß einer Ausführungsform der Erfindung;

Figur 3: eine schematische Darstellung einer Folge von zwei Rampensätzen von Rapid-Chirp-Radarsignalen gemäß einer weiteren Ausführungsform der Erfindung;

Figur 4. eine schematische Darstellung von verschachtelten Rapid-Chirp-Radarsignalen gemäß noch einer weiteren Ausführungsform der Erfindung;

Figur 5. eine schematische Darstellung zur Erläuterung des Suchverfahrens, wie es einer Ausführungsform der vorliegenden Erfindung zugrunde liegt; und

Figur 6: eine schematische Darstellung eines Verfahrens zum Betrieb eines Radarsensors gemäß noch einer weiteren Ausführungsform der Erfindung.

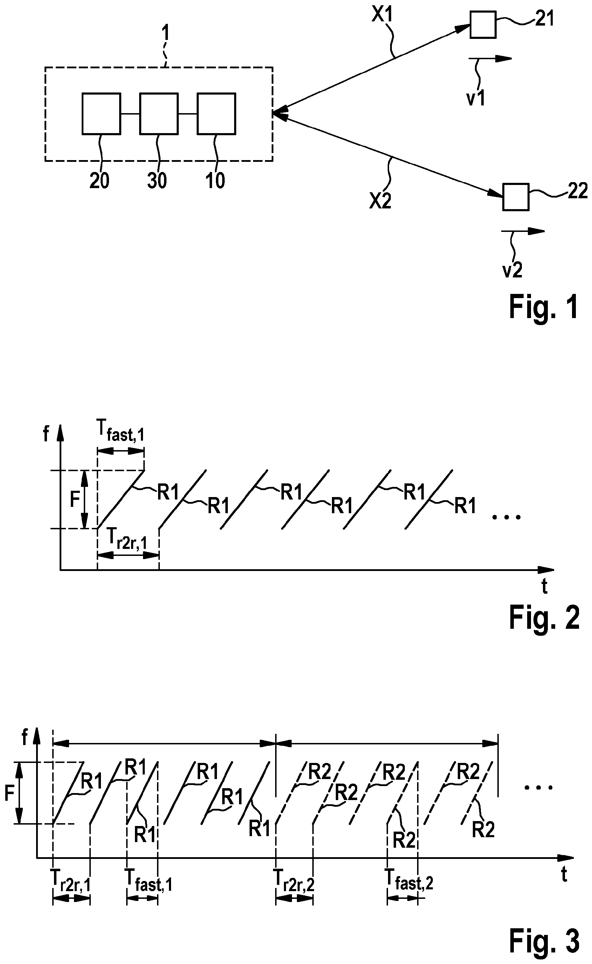

Figur 1 zeigt ein Radarsystem 1 gemäß eines Ausführungsbeispiels der vorliegenden Erfindung. Beispielsweise kann es sich bei dem Radarsensor 1 um einen Radarsensor eines Fahrassistenzsystems handeln. Solche Fahrassistenzsysteme kommen bevorzugt in modernen Kraftfahrzeugen zum Einsatz.

Das Radarsystem 1 umfasst dabei eine Sende-/Empfangseinheit 10. Diese Sende-/Empfangseinheit 10 sendet eine Sequenz modulierter Rapid-Chirp-Radarsignale aus. Diese ausgesendeten Rapid-Chirp-Radarsignale treffen auf die Objekte 21 und 22, die sich jeweils in dem Abstand X1 und X2 zum dem Radarsensor 1 befinden. Die Objekte 21 und 22 bewegen sich dabei relativ zu dem Radarsensor 1 mit den Geschwindigkeiten v1 und v2. Darüber hinaus ist es weiterhin auch möglich, dass sich weitere Objekte im Erfassungsbereich des Radarsensors 1 befinden. Die Abstände X1 und X2, sowie die Relativgeschwindigkeiten v1 und v2 der einzelnen Objekte können dabei verschieden sein. Es ist jedoch ebenso möglich, dass die Abstände X1 und X2 bzw. die Relativgeschwindigkeiten v1 und v2 einiger Objekte ganz oder annähernd gleich sind.

Die von der Sende-/Empfangseinheit 10 ausgesendeten modulierten Rapid-Chirp-Radarsignale treffen nach einiger Zeit auf die Objekte 21 und 22. Die Objekte 21 und 22 reflektieren dabei ganz oder teilweise die eintreffenden Rapid-Chirp-Radarsignale. Daraufhin empfängt die Sende-/Empfangseinheit 10 des Radarsensors 1 einen Teil der von den Objekten 21 und 22 reflektieren Rapid-Chirp-Radarsignalen. Die von der Sende-/Empfangseinheit 10 empfangenen Radarechos werden daraufhin in einer Abtastvorrichtung 30 in Digitalsignale konvertiert und in einer Auswerteeinheit 20 mit den ausgesendeten Rapid-Chirp-Radarsignalen verglichen. Aus diesem Vergleich ermittelt der Radarsensor 1 daraufhin den räumlichen Abstand X1 und X2, sowie die Relativgeschwindigkeiten v1 und v2 der Objekte 21 und 22 im Erfassungsbereich des Radarsensors.

Figur 2 zeigt eine schematische Darstellung eines Rampensatzes mit einer Mehrzahl L von Frequenzrampen R1 in einem Zeit-Frequenz-Diagramm, wie er einem Ausführungsbeispiel der vorliegenden Erfindung zugrunde liegt. Ein Rampensatz umfasst dabei eine vorgegebene Anzahl L von Frequenzrampen R1. Jeder dieser Frequenzrampen R1 weist dabei denselben Frequenzhub F und dieselbe Rampendauer $T_{fast,1}$ auf. Der Abstand zwischen zwei aufeinanderfolgenden Frequenzrampen R1 wird dabei durch den Parameter $T_{r2r,1}$ charakterisiert. Die Rampendauer $T_{fast,1}$ beträgt dabei für modulierte Rapid-Chirp-Radarsignale vorzugsweise weniger als 25 µs. Beispielsweise kann die Rampendauer $T_{fast,1}$ etwa 10 µs oder weniger betragen. Der zeitliche Abstand zwischen dem Ende einer ersten Frequenzrampen R1 und der darauf folgenden zweiten Frequenzrampen R1 beträgt in der Regel nur wenige Mikrosekunden, so dass sich ein zeitlicher Abstand zwischen zwei aufeinanderfolgenden Frequenzrampen von beispielsweise etwa 14 µs ergeben kann. Ein Rampensatz kann dabei eine vorgegebene Anzahl L von Frequenzrampen R1 umfassen. Beispielsweise kann ein Rampensatz 256 Frequenzrampen R1 umfassen. Eine davon abweichende Anzahl von Frequenzrampen R1 ist jedoch ebenso möglich. Der Frequenzhub der Frequenzrampen R1 beträgt üblicherweise mehr als 100 MHz. Beispielsweise ist ein Frequenzhub F von 250 MHz möglich. Zur Digitalisierung der Frequenzrampen und der erfassten Radarechos müssen die Signale abgetastet werden. Hierzu kann beispielsweise das Radarsystem mit den zuvor genannten Systemparametern pro Frequenzrampe 512 Mal abgetastet werden. Diese Abtastrate K begrenzt dabei die maximale Leistungsfähigkeit des Radarsystems bezüglich Eindeutigkeit und Trennfähigkeit.

Der maximale Eindeutigkeitsbereich $X_{max}$ und das Auflösungsvermögen $\Delta X$ sind dabei wie folgt von der Abtastrate K abhängig:

$$X_{max} = K/2 * \Delta X \; ; \; f_{X,max} = K/2 * \Delta f_X \qquad (1)$$

Weiterhin hängt die maximal auflösbare Relativgeschwindigkeit $v_{max}$ und das Auflösungsvermögen der Relativgeschwindigkeit $\Delta v$ von der Anzahl der Frequenzrampen L eines Rampensatzes folgendermaßen ab:

$$v_{max} = L/2 * \Delta v \; ; \; f_{v,max} = L/2 * \Delta f_v. \qquad (2)$$

Figur 3 zeigt eine schematische Darstellung eines Zeit-Frequenz-Diagrammes mit zwei aufeinander folgenden Rampensätzen gemäß eines Ausführungsbeispiels der vorliegenden Erfindung. Der erste Rampensatz umfasst dabei eine vorgegebene Anzahl L von Frequenzrampen R1. Alle Frequenzrampen des ersten Rampensatzes weisen denselben Frequenzhub F auf. Weiterhin haben alle Frequenzrampen R1 des ersten Rampensatzes eine vorgegebene erste Rampendauer $T_{fast,1}$ und einen zeitlichen Abstand zwischen zwei Frequenzrampen von $T_{r2r,1}$. Diesem ersten Rampensatz schließt sich ein zweiter Rampensatz an, der ebenfalls die gleiche vorgegebene Anzahl L von Frequenzrampen aus R2 umfasst. Der zweite Rampensatz umfasst dabei zweite Frequenzrampen R2, die vorzugsweise den gleichen Frequenzhub F wie die ersten Frequenzrampen R1 aufweisen. Darüber hinaus haben die zweiten Frequenzrampen R2 eine Rampendauer $T_{fast,2}$ und einen zeitlichen Abstand zwischen zwei aufeinanderfolgenden zweiten Frequenzrampen R2 von $T_{r2r,2}$. Auch wenn in dem in Figur 3 dargestellten Ausführungsbeispiel nur zwei aufeinanderfolgende Rampensätze dargestellt sind, so ist es darüber hinaus ebenso möglich, mehr als zwei Rampensätze nacheinander auszusenden, wobei jeder der Rampensätze jeweils individuelle Systemparameter für die Rampendauer $T_{fast,i}$ und für den zeitlichen Abstand $T_{r2r,i}$ zwischen zwei schnellen Frequenzrampen aufweist.

Für die Erweiterung des maximalen Eindeutigkeitsbereiches $f_{X,max}$ in Bezug auf die Entfernung der zu überwachenden Objekte werden mehrere Rampensätze ausgesendet, wobei sich die Rampendauern $T_{fast,i}$ der Frequenzrampen der unterschiedlichen Rampensätze unterscheiden. Mit anderen Worten, die Rampendauer $T_{fast,1}$ der Frequenzrampen R1 des ersten Rampensatzes ist dabei verschieden von der Rampendauer $T_{fast,2}$ der Frequenzrampen R2 des zweiten Rampensatzes. Werden mehr als zwei verschiedene Rampensätze ausgesendet, so weisen auch die nachfolgenden Rampensätze jeweils abweichende Rampendauern $T_{fast,i}$ auf. Weiterhin ist für den Fall, dass der maximale Eindeutigkeitsbereich des Radarsensors 1 erweitert werden soll, bei allen Frequenzrampen der verschiedenen Rampensätze der zeitliche Abstand $T_{r2r,i}$ zwischen zwei aufeinanderfolgenden schnellen Frequenzrampen jeweils gleich. Ferner weisen auch alle Rampensätze jeweils die gleiche Anzahl L von Frequenzrampen R1, R2 auf.

Die tatsächliche Entfernung im Ortsfrequenzraum ergibt sich dabei zu:

$$f_{R0} = n_i \cdot f_{Xmax,i} + r_i, \qquad (3)$$

wobei

$$r_i = q_i \cdot \Delta f_{X,i} \qquad (4)$$

$n_i$ und $q_i$ sind dabei ganze Zahlen und i eine ganze Zahl zwischen 1 und P, wobei P die Anzahl der unterschiedlichen Frequenzrampen ist. Daher kann der Eindeutigkeitsbereich des Radarsystems für die Entfernung bis zum kleinsten gemeinsamen Vielfachen (kgV) der Eindeutigkeitsbereiche aller einzelnen Rampensätze erweitert werden:

$$f_{X,max} = kgV(f_{X,max,1}, f_{X,max,2}, \ldots, f_{X,max,P}) \qquad (5)$$

Bei der Auswahl der Modulationsparameter ist daher insbesondere darauf zu achten, dass die resultierenden Eindeutigkeitsbereiche der einzelnen Rampensätze kein Vielfaches voneinander sind.

Alternativ kann zur Erhöhung des Eindeutigkeitsbereiches in Bezug auf die Relativgeschwindigkeit der zu überwachenden Objekte der zeitliche Abstand $T_{r2r,i}$ zwischen zwei schnellen Frequenzrampen in den einzelnen Rampensätzen variiert werden. Die übrigen Systemparameter wie Frequenzhub F, Rampendauer $T_{fast,i}$ sowie Anzahl L der Frequenzrampen je Rampensatz bleiben dabei für alle Rampensätze gleich. Analog zur Erhöhung der Eindeutigkeit in Entfernungsrichtung kann somit auch die Eindeutigkeit der Relativgeschwindigkeit $v_{max}$ entsprechend erhöht werden:

$$f_{v,max} = kgV(f_{v,max,1}, f_{v,max,2}, \ldots, f_{v,max,P}) \qquad (6)$$

Die Systemparameter der Frequenzrampen und der Rampensätze können dabei je nach aktuellen Rahmenbedingungen dynamisch angepasst werden. Beispielsweise können in einem Radarsystem eines Fahrassistenzsystems eines Kraftfahrzeugs die Systemparameter so angepasst werden, dass während der langsamen Fahrt oder eines Einparkvorgangs der Eindeutigkeitsbereich relativ gering ist. Erhöht sich dagegen die Geschwindigkeit, so können die Systemparameter wie Rampendauer $T_{fast,i}$ und/oder der zeitliche Abstand $T_{r2r,i}$ der Frequenzrampen je Rampensatz angepasst werden, um den Eindeutigkeitsbereich zu vergrößern. Je nach Anwendungsfall sind darüber hinaus auch weitere dynamische Anpassungen möglich.

Für die Analog-Digitalwandlung der Rapid-Chirp-Radarsignale und der empfangenen Radarechos müssen die jeweiligen Signale dabei mit einer geeigneten Abtastrate digitalisiert werden. Dabei muss die Abtastrate der jeweiligen Frequenzrampen das Abtasttheorem von Nyquist-Shannon erfüllen und daher mindestens mit der doppelten Frequenz der Frequenzrampe abgetastet werden.

Ferner ist es für die weitere Signalverarbeitung und insbesondere für das weiter unten beschriebene Suchverfahren vorteilhaft, wenn jede Frequenzrampe die gleiche Anzahl von Abtastwerten aufweist. Insbesondere ist es dabei vorteilhaft, für alle abgetasteten Frequenzrampen eine Anzahl von Abtastwerten zu generieren, die sich besonders effizient mit einer schnellen Fourier-Transformation (FFT) weiterverarbeiten lässt.

Dies bedeutet, dass sich für jeden Rampensatz eine individuelle Abtastfrequenz ergibt. Dabei sind die einzelnen Abtastraten und somit auch die Systemparameter für die Frequenzrampen der einzelnen Rampensätze so zu wählen, dass die erweiterte maximale Eindeutigkeit und die Messgenauigkeit die Systemanforderungen erfüllen.

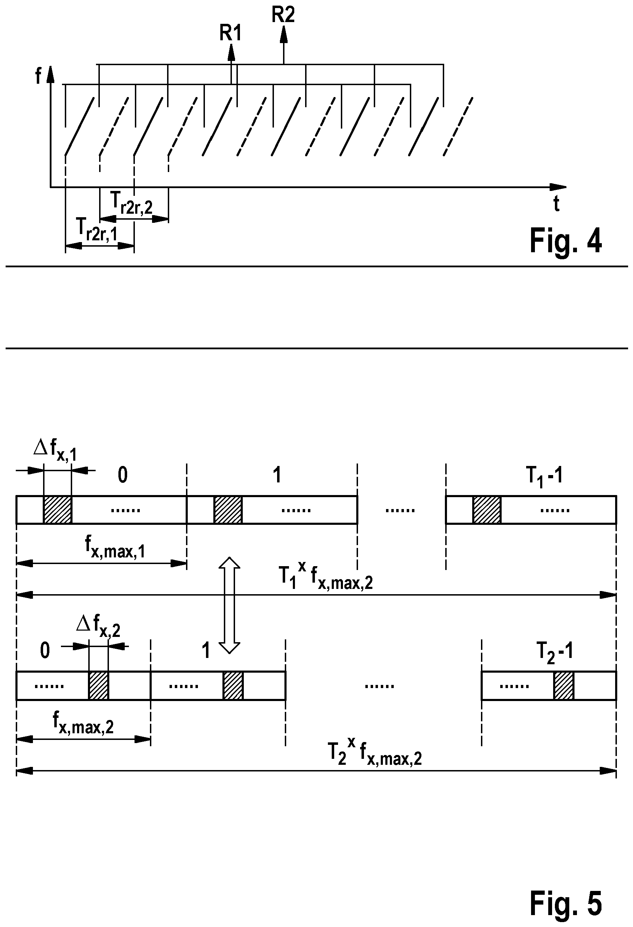

Figur 4 zeigt eine schematische Darstellung eines Zeit-Frequenz-Diagramms für eine Verschachtelung mehrerer Rampensätze gemäß eines weiteren Ausführungsbeispiels der vorliegenden Erfindung. Wie in diesem Diagramm zu erkennen ist, werden dabei nacheinander zunächst eine erste Frequenzrampe R1 eines ersten Rampensatzes ausgesendet und daraufhin zunächst die erste Frequenzrampe R2 eines zweiten Rampensatzes. Sollten darüber hinaus noch weitere Rampensätze zum Einsatz kommen, so werden in diesem Fall (hier nicht dargestellt) auch zunächst jeweils die ersten Frequenzrampen der jeweiligen Rampensätze nacheinander ausgesendet. Nachdem die erste Frequenzrampe des letzten Rampensatzes ausgesendet wurde, wird daraufhin die zweite Frequenzrampe R1 des ersten Rampensatzes, anschließend die zweite Frequenzrampe des zweiten Rampensatzes usw. ausgesendet. Durch diese Verschachtelung der einzelnen Rampensätze untereinander kann erreicht werden, dass die einzelnen Rampensätze weniger anfällig auf Veränderungen der zu detektierenden Objekte sind. Durch die Verschachtelung der Rampensätze treffen Frequenzrampen aller Rampensätze nahezu zeitgleich an den Objekten ein und werden von diesen reflektiert. Somit ist ein solches System weniger anfällig bei der Überwachung von Objekten mit einer hohen Relativgeschwindigkeit. Bei der Überwachung von Objekte mit einer hohen Relativgeschwindigkeit besteht beispielsweise die Gefahr, dass sich der räumliche Abstand zwischen Radarsystem und Objekt zwischen der Aussendung des ersten Rampensatzes und der Aussendung des daraufhin folgenden zweiten Rampensatzes verändert hat und somit kein oder nur ein fehlerhaftes Matching möglich wäre. Diese Problematik kann durch die erfindungsgemäße Verschachtelung der Rampensätze entgegengewirkt werden.

Nach der Analog-zu-Digitalwandlung der Signale erfolgt eine weitere Signalverarbeitung, die unter anderem eine zweistufige schnelle Fourrier-Transformation (FFT) für den jeweiligen Rampensatz umfasst. Diese Signalverarbeitung liefert ein zweidimensionales Spektrum des Frequenzbereiches fx bezüglich der Entfernungsschätzung über den Frequenzbereich $f_D$ bezüglich der Relativgeschwindigkeitsschätzung. Mehrdeutigkeiten in diesem erreichten Frequenzspektrum können daraufhin mit Hilfe geeigneten Suchverfahrens aufgelöst werden.

Figur 5 zeigt eine schematische Darstellung zur Auflösung von Mehrdeutigkeiten in Entfernungsrichtungen für eine Auflösungszelle $\Delta v$ in Richtung der Relativgeschwindigkeit. Hierzu wird für jeden detektierten Peak das Spektrum $f_{X,max,i}$ in Dimension der Entfernung zunächst periodisch fortgesetzt. Das berechnete Spektrum $f_{X,max,i}$ in der Dimension der Entfernung kann so oft wiederholt werden, bis der maximal aufzulösende Entfernungsbereich $f_{X,max,i}$ gemäß Formel 5 erreicht wird. Diese periodische Wiederholung des Spektrums $f_{X,max,i}$ erfolgt für alle verarbeiteten Rampensätze.

In dem in Figur 5 dargestellten Ausführungsbeispiel werden beispielsweise zwei Rampensätze gegenübergestellt. Dabei bezeichnet $f_{X,max,1}$ die Ausdehnung des Spektrums des ersten Rampensatzes in Dimension der Entfernung. $\Delta f_{X,1}$ ist dabei die Größe einer Auflösungzelle des Spektrums des ersten Rampensatzes in Dimension der Entfernung. $f_{X,max,2}$ bezeichnet die Ausdehnung des Spektrums des zweiten Rampensatzes in Dimension der Entfernung. $\Delta f_{X,2}$ ist dabei die Größe einer Auflösungzelle des Spektrums des zweiten Rampensatzes in Dimension der Entfernung.

In dem hier dargestellten Beispiel wird das Spektrum des ersten Rampensatzes T1 mal wiederholt, und das Spektrum des zweiten Rampensatzes wird T2 mal wiederholt. Somit wird das Spektrum des ersten Rampensatzes auf $T_1 \cdot f_{X,max,1}$ erweitert ,und das Spektrum des zweiten des zweiten Rampensatzes wird auf $T_2 \cdot f_{X,max,2}$ erweitert. Weitere Ausführungsbeispiele mit mehr als zwei Rampensätzen sind ebenso möglich.

Anschließend werden die periodischen Wiederholungen der einzelnen Spektren miteinander verglichen und auf Übereinstimmungen der Peaks geprüft. In dem dargestellten Beispiel gemäß Figur 5 stimmt beispielsweise in der zweiten Wiederholung des ersten Spektrums und der zweiten Wiederholung des zweiten Spektrums der Peaks am besten überein, so dass sich hieraus die tatsächliche Entfernung ergibt.

Zur Auflösung der Mehrdeutigkeiten und zur Bestimmung von Schätzwerten $n_{i,est}$ des Faktors $n_i$ gemäß Formel 3 wird eine sogenannte Kostenfunktion C aufgestellt und minimiert, wie dies Formel 7 für zwei unterschiedliche Rampensätze beschreibt. Die Bestimmung der besten Übereinstimmung erfolgt dabei durch ein Suchverfahren, das diese Kostenfunktion C minimiert.

$$min\ C(n_{1,est},\ n_{2,est}) = \{|n_{1,est}\ f_{X,max,1} + r_{1,est} - n_{2,est}\ f_{X,max,1} - r_{2,est}|\} \rightarrow (n_1,\ n_2) \qquad (7)$$

Ein solches Suchverfahren zur Minimierung der Kostenfunktion C kann dabei beispielsweise alle Variationen von $n_1$ und $n_2$ durchprobieren und als Lösung diejenigen Werte von $n_1$ und $n_2$ ermitteln, bei denen die Kostenfunktion minimal wird. Hierbei müssen $T_1 \cdot T_2$ separate Kostenfunktionen berechnet werden.

Nachdem für jeden Rampensatz 1 - P diejenige Wiederholung $n_i$ ermittelt wurde, bei der die periodische Fortsetzung die beste Übereinstimmung ergibt, kann die endgültige Lösung, beispielsweise durch Mittelwertbildung, berechnet werden.

Durch ein geeignetes optimiertes Suchverfahren kann der Suchaufwand weiter verringert werden. Ein solches verbessertes Suchverfahren führt dabei zur Minimierung der Kostenfunktion C beispielsweise folgende Schritte durch.

Für alle Werte 0 bis $T_1$ -1 des ersten Schätzwerts $n_{1,est}$ wird die Funktion $n_{2,est}$ $(n_{1,est})$ gebildet und minimiert: $min\ C(n_{1,est},\ n_{2,est}(n_{1,est}))$. Weiterhin wird für alle Werte 0 bis $T_2$ - 1 des zweiten Schätzwerts $n_{2,est}$ die Funktion $n_{1,est}$ $(n_{2,est})$ gebildet und minimiert: $min\ C(n_{1,est}(n_{2,est}),\ n_{2,est})$. Schließlich wird das Minimum beider Funktionen gesucht:

$$min\ \{min\ C(n_{1,est},\ n_{2,est}\ (n_{1,est})),\ min\ C(n_{1,est}\ (n_{2,est}),\ n_{2,est})\}. \qquad (8)$$

Somit ergibt sich nur ein Aufwand von $T_1 + T_2$ zu lösenden Kostenfunktionen C.

Auf diese Weise kann der Eindeutigkeitsbereich des Radarsystems bis maximal zu dem kleinsten gemeinsamen Vielfachen der Eindeutigkeitsbereiche der einzelnen Rampensätze erweitert werden. Der maximale Schätzfehler bei der Ermittlung wird dabei nach oben durch das Abtastintervall der schnellen Fourier-Transformation begrenzt.

Das zuvor in Bezug auf Entfernungsschätzung beschriebene Suchverfahren kann darüber hinaus ebenso in Bezug auf die Schätzung der Relativgeschwindigkeit angewendet werden.

In den meisten Fällen sind bereits zwei Rampensätze mit einem unterschiedlichen Systemparameter für die Erweiterung der maximalen Eindeutigkeit in die gewünschte Dimension (Entfernung oder Relativgeschwindigkeit) bereits ausreichend. Bei nur zwei unterschiedlichen Rampensätzen kann dabei eine besonders schnelle und ressourcenschonende Verarbeitung erreicht werden. Darüber hinaus kann durch die Verwendung von mehr als zwei Rampensätzen die Genauigkeit noch weiter verbessert werden und/oder der Eindeutigkeitsbereich zusätzlich erweitert werden.

Wie zuvor bereits beschrieben kann durch mehrere Rampensätze mit einer Variation in der Rampendauer $T_{fast,i}$ der Eindeutigkeitsbereich in Bezug auf die Entfernung erhöht werden. Durch Variation des zeitlichen Abstands $T_{r2r,i}$ zwischen zwei aufeinanderfolgenden schnellen Frequenzrampen kann darüber hinaus der Eindeutigkeitsbereich in Bezug auf die Relativgeschwindigkeit erhöht werden. Somit kann durch mindestens drei aufeinanderfolgende Rampensätze der Eindeutigkeitsbereich die Entfernung und Relativgeschwindigkeit vergrößert werden, indem beispielsweise zwischen einem ersten und zweiten Rampensatz die Rampendauer $T_{fast,i}$ variiert wird und zwischen dem zweiten und dritten Rampensatz der zeitliche Abstand $T_{r2r,i}$ zwischen aufeinanderfolgenden schnellen Frequenzrampen variiert wird.

Alternative Variationen der Systemparameter sind selbstverständlich ebenso möglich.

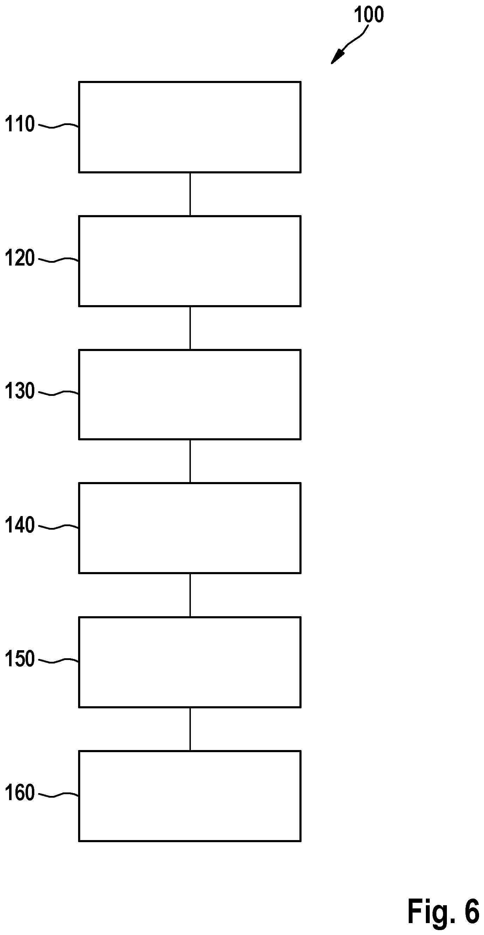

Figur 6 zeigt eine schematische Darstellung eines Verfahrens 100 zum Betrieb eines Radarsensors 1 mit folgendem Schritt: Zunächst wird in einem Schritt 110 eine Sequenz von modulierten Rapid-Chirp-Radarsignalen ausgesendet und daraufhin in Schritt 120 die Radarechos der ausgesendeten Radarsignale empfangen, die von den Objekten reflektiert werden. Dabei umfassen die ausgesendeten Rapid-Chirp-Radarsignale eine Mehrzahl von Rampensätzen. Jeder Rampensatz weist eine Mehrzahl von Frequenzrampen auf. Ferner weist jede Frequenzrampe eines Rampensatzes eine vorgegebene Rampendauer $T_{fast,i}$ und einen Frequenzhub F auf. Zwei aufeinanderfolgende Frequenzrampen weisen darüber hinaus einen Zeitunterschied $T_{r2r,i}$ auf. Gemäß dem erfindungsgemäßen Verfahren unterscheiden sich zwei Rampensätze mindestens in der Rampendauer $T_{fast,i}$. Gegebenenfalls unterscheiden sich zwei Rampensätze zusätzlich im Zeitunterschied $T_{r2r,i}$ zwischen aufeinanderfolgenden Frequenzrampen. In Schritt 130 werden daraufhin die empfangenen Radarechos mit einer vorgegebenen Abtastfrequenz erfasst. Dabei wird die Abtastfrequenz für die einzelnen Rampensätze variiert. Insbesondere wird die Abtastfrequenz dabei so angepasst, dass sich aufgrund der Variation der einzelnen Rampendauern stets eine konstante Anzahl von Abtastwerten ergibt.

Weiterhin kann in Schritt 140 ein separates Spektrum $f_{X,max,1}$ , $f_{X,max,2}$ der erfassten Radarechos für jeden Satz der Mehrzahl von Rampensätzen berechnet werden. Daraufhin wird in Schritt 150 eine periodische Fortsetzung $T_1 \cdot f_{X,max,1}$ und $T_2 \cdot f_{X,max,2}$ der berechneten Spektren $f_{X,max,1}$ und $f_{X,max,2}$ in Dimension der Entfernung und/oder Geschwindigkeit erstellt. Anschließend wird in Schritt 160 eine Übereinstimmung eines detektierten Objekts in den periodischen Fortsetzungen $T_1 \cdot f_{X,max,1}$ und $T_2 \cdot f_{X,max,2}$ der berechneten Spektren $f_{X,max,1}$ und $f_{X,max,2}$ ermittelt.

Bei der Ausführung des Schritts 150 zur Erstellung der periodischen Fortsetzungen $T_1 \cdot f_{X,max,1}$ und $T_2 \cdot f_{X,max,2}$ werden die berechneten Spektren $f_{X,max,1}$ und $f_{X,max,2}$ bis zum kleinsten gemeinsamen Vielfachen der Eindeutigkeitsbereiche der Rampensätze erweitert.

Eine effiziente Ermittlung einer Übereinstimmung ist durch Bildung einer zuvor bereits beschriebenen Kostenfunktion möglich.

Zusammenfassend betrifft die vorliegende Erfindung einen Radarsensor und ein Verfahren zum Betrieb eines Radarsensors, wobei der Eindeutigkeitsbereich des Radarsensors in Bezug auf Entfernung und/oder Relativgeschwindigkeit vergrößert wird. Hierzu werden von dem Radarsensor mehrere Rampensätze ausgesendet, wobei sich die Frequenzrampen der einzelnen Rampensätze jeweils in einem Systemparameter unterscheiden. Insbesondere wird dabei die Abtastfrequenz während der Erfassung der Radarechos so angepasst, dass sich stets eine konstante Anzahl von Samplewerten für jede Frequenzrampe ergibt. Zur Auswertung der Radarsignale kann das Spektrum periodisch fortgesetzt und miteinander vergleichen werden. Insbesondere in Kombination mit einem geeigneten Suchverfahren ist somit eine zuverlässige Bestimmung von Entfernung und Relativgeschwindigkeit bei großem Eindeutigkeitsbereich möglich.

## Patentansprüche

1. Radarsensor (1), in einem Kraftfahrzeug mit
   einer Sende-/Empfangseinheit (10), die dazu ausgebildet ist, eine Sequenz modulierter Rapid-Chirp-Radarsignale auszusenden und Radarechos der ausgesendeten Rapid-Chirp-Radarsignale zu empfangen, die von einem Objekten (21, 22) reflektiert werden; und
   einer Abtastvorrichtung (30), die dazu ausgelegt ist, die empfangenen Radarechos mit einer Abtastfrequenz abzutasten;
   wobei die ausgesendeten Rapid-Chirp-Radarsignale eine Mehrzahl von Rampensätzen umfassen;
   jeder Rampensatz eine Mehrzahl (L) von Frequenzrampen (R1, R2) aufweist;
   jede Frequenzrampe (R1, R2) eines Rampensatzes eine Rampendauer ($T_{fast,i}$) und einen Frequenzhub (F) aufweist;
   zwei aufeinander folgende Frequenzrampen (R1, R2) einen Zeitunterschied ($T_{r2r,i}$) aufweisen; und
   die Sende-/Empfangseinheit (10) mindestens zwei Rampensätze aussendet, die sich in der Rampendauer ($T_{fast,i}$) unterscheiden;
   **dadurch gekennzeichnet, dass**
   die ausgesendeten Rapid-Chirp-Radarsignale eine Mehrzahl von ineinander verschachtelten Rampensätzen umfassen,
   die Abtastvorrichtung (30) die Abtastfrequenz für jeden Rampensatz variiert, wobei für jeden Rampensatz eine individuelle Abtastfrequenz gewählt wird und jede Frequenzrampe (R1, R2) eine gleiche Anzahl von Abtastwerten aufweist, und
   die Unterschiede der Rampendauern ($T_{fast,i}$) in Abhängigkeit der Fahrzeuggeschwindigkeit dynamisch angepasst werden.

2. Radarsensor nach Anspruch 1, wobei der Radarsensor einen Eindeutigkeitsbereich aufweist, der bis zum kleinsten gemeinsamen Vielfachen aller Eindeutigkeitsbereiche der einzelnen Rampensätze erweitert wird.

3. Fahrassistenzsystem mit einem Radarsensor nach einem der Ansprüche 1 oder 2.

4. Kraftfahrzeug mit einem Fahrassistenzsystem nach Anspruch 3.

5. Verfahren (100) zum Betrieb eines Radarsensors in einem Kraftfahrzeug mit den Schritten:

Aussenden (110) einer Sequenz modulierter Rapid-Chirp-Radarsignale;
Empfangen (120) von Radarechos der ausgesendeten modulierten Rapid-Chirp-Radarsignale, welche von einem Objekt (21, 22) reflektiert werden;
Erfassen (130) der empfangenen Radarechos mit einer vorgegebenen Abtastfrequenz;
wobei die ausgesendeten modulierten Rapid-Chirp-Radarsignale eine Mehrzahl von Rampensätzen umfassen;
jeder Rampensatz eine Mehrzahl (L) von Frequenzrampen (R1, R2) aufweist;
jede Frequenzrampe (R1, R2) eines Rampensatzes eine Rampendauer ($T_{fast,i}$) und einen Frequenzhub (F) aufweist;
zwei aufeinander folgende Frequenzrampen einen Zeitunterschied ($T_{r2r,i}$) aufweisen; und
sich zwei Rampensätze mindestens in der Rampendauer ($T_{fast,i}$) unterscheiden;
**dadurch gekennzeichnet, dass**
die ausgesendeten Rapid-Chirp-Radarsignale eine Mehrzahl von ineinander verschachtelten Rampensätzen umfassen,
die vorgegeben Abtastfrequenz für jeden Rampensatz variiert wird, wobei für jeden Rampensatz eine individuelle Abtastfrequenz gewählt wird und jede Frequenzrampe (R1, R2) eine gleiche Anzahl von Abtastwerten aufweist, und
die Unterschiede der Rampendauern ($T_{fast,i}$) in Abhängigkeit der Fahrzeuggeschwindigkeit dynamisch angepasst werden.

6. Verfahren nach Anspruch 5, ferner umfassend die Schritte:

Berechnen (140) eines separaten Spektrums ($f_{X,max,1}$, $f_{X,max,2}$) der erfassten Radarechos für jeden der Mehrzahl von Rampensätzen;
Erstellen (150) einer periodischen Fortsetzung ($T_1 \cdot f_{X,max,1}$, $T_2 \cdot f_{X,max,2}$) der berechneten Spektren ($f_{X,max,1}$, $f_{X,max,2}$) in Dimension der Entfernung und/oder Geschwindigkeit;
Ermitteln (160) einer Übereinstimmung eines detektierten Objekts in den periodischen Fortsetzungen ($T_1 \cdot f_{X,max,1}$, $T_2 \cdot f_{X,max,2}$) der berechneten Spektren ($f_{X,max,1}$, $f_{X,max,2}$).

7. Verfahren nach Anspruch 6, wobei der Schritt (150) zur Erstellung der periodischen Fortsetzungen ($T_1 \cdot f_{X,max,1}$, $T_2 \cdot f_{X,max,2}$) die berechneten Spektren ($f_{X,max,1}$, $f_{X,max,2}$) bis um kleinsten gemeinsamen Vielfachen aller Eindeutigkeitsbereiche der Rampensätze erweitert.

8. Verfahren nach Anspruch 6 oder 7, wobei der Schritt (160) zum Ermitteln einer Übereinstimmung eine Kostenfunktion bildet und zur Ermittlung der Übereinstimmung ein Minimum der Kostenfunktion bestimmt.

**Claims**

1. Radar sensor (1) in a motor vehicle having a transmission/reception unit (10) designed to transmit a sequence of modulated rapid chirp radar signals and to receive radar echoes of the transmitted rapid chirp radar signals that are reflected by an object (21, 22); and
a sampling apparatus (30) designed to sample the received radar echoes at a sampling frequency; wherein the transmitted rapid chirp radar signals comprise a plurality of sets of ramps;
each set of ramps has a plurality (L) of frequency ramps (R1, R2) ;
each frequency ramp (R1, R2) in a set of ramps has a ramp duration ($T_{fast,i}$) and a frequency swing (F); two successive frequency ramps (R1, R2) have a time difference ($T_{r2r,i}$) ; and
the transmission/reception unit (10) transmits at least two sets of ramps that differ in ramp duration ($T_{fast,i}$) ;
**characterized in that**
the transmitted rapid chirp radar signals comprise a plurality of nested sets of ramps,
the sampling apparatus (30) varies the sampling frequency for each set of ramps, an individual sampling frequency being chosen for each set of ramps and each frequency ramp (R1, R2) having an identical number of samples, and the differences in the ramp durations ($T_{fast,i}$) are dynamically adapted on the basis of the vehicle speed.

2. Radar sensor according to Claim 1, wherein the radar sensor has a uniqueness range that is expanded to the smallest common multiple of all the uniqueness ranges of the individual sets of ramps.

3. Driving assistance system having a radar sensor according to either of Claims 1 and 2.

4. Motor vehicle having a driving assistance system according to Claim 3.

5. Method (100) for operating a radar sensor in a motor vehicle, having the steps of:

transmitting (110) a sequence of modulated rapid chirp radar signals;
receiving (120) radar echoes of the transmitted modulated rapid chirp radar signals that are reflected by an object (21, 22);
capturing (130) the received radar echoes at a prescribed sampling frequency;
wherein the transmitted modulated rapid chirp radar signals comprise a plurality of sets of ramps;
each set of ramps has a plurality (L) of frequency ramps (R1, R2) ;
each frequency ramp (R1, R2) in a set of ramps has a ramp duration ($T_{fast,i}$) and a frequency swing (F);
two successive frequency ramps have a time difference ($T_{r2r,i}$); and
two sets of ramps differ at least in ramp duration ($T_{fast,i}$) ;

**characterized in that**
the transmitted rapid chirp radar signals comprise a plurality of nested sets of ramps,
the prescribed sampling frequency is varied for each set of ramps, an individual sampling frequency being chosen for each set of ramps and each frequency ramp (R1, R2) having an identical number of samples, and the differences in the ramp durations ($T_{fast,i}$) are dynamically adapted on the basis of the vehicle speed.

6. Method according to Claim 5, further comprising the steps of:

calculating (140) a separate spectrum ($f_{x,max,1}$, $f_{X,max,2}$) of the captured radar echoes for each of the plurality of sets of ramps;
producing (150) a periodic continuation ($T_1 \cdot f_{x,max,1}$, $T_2 \cdot f_{x,max,2}$) of the calculated spectra ($f_{x,max,1}$, $f_{x,max,2}$) in the dimension of range and/or speed;
ascertaining (160) a concordance for a detected object in the periodic continuations ($T_1 \cdot f_{x,max,1}$, $T2 \cdot f_{x,max,2}$) of the calculated spectra ($f_{x,max,1}$, $f_{x,max,2}$).

7. Method according to Claim 6, wherein the step (150) for producing the periodic continuations ($T_1 \cdot f_{x,max,1}$, $T2 \cdot f_{x,max,2}$) expands the calculated spectra ($f_{x,max,1}$, $f_{x,max,2}$) to smallest common multiples of all uniqueness ranges of the sets of ramps.

8. Method according to Claim 6 or 7, wherein the step (160) for ascertaining a concordance forms a cost function and ascertains the concordance by determining a minimum of the cost function.

**Revendications**

1. Capteur radar (1) dans un véhicule automobile, comprenant
une unité d'émission-réception (10) qui est conçue pour émettre une séquence de signaux radar modulés à modulation de fréquence rapide et recevoir des échos radar des signaux radar à modulation de fréquence rapide émis, lesquels sont réfléchis par un objet (21, 22) ; et un dispositif d'échantillonnage (30) qui est conçu pour échantillonner les échos radar reçus avec une fréquence d'échantillonnage ;
les signaux radar à modulation de fréquence rapide émis comprenant une pluralité de jeux de rampes ;
chaque jeu de rampes présente une pluralité (L) de rampes de fréquence (R1, R2) ;
chaque rampe de fréquence (R1, R2) d'un jeu de rampes présente une durée de rampe ($T_{fast,i}$) et une excursion de fréquence (F) ;
deux rampes de fréquence (R1, R2) successives présentent une différence de temps ($T_{r2r,i}$) ; et
l'unité d'émission-réception (10) émet au moins deux jeux de rampes qui se différencient par la durée de rampe

($T_{fast,i}$) ;
**caractérisé en ce que**
les signaux radar à modulation de fréquence rapide émis comprennent des jeux de rampes imbriqués les uns dans les autres,
le dispositif d'échantillonnage (30) fait varier la fréquence d'échantillonnage pour chaque jeu de rampes, une fréquence d'échantillonnage individuelle étant sélectionnée pour chaque jeu de rampes et chaque rampe de fréquence (R1, R2) présentant un nombre égal de valeurs échantillonnées, et
les différences entre les durées de rampe ($T_{fast,i}$) sont adaptées dynamiquement en fonction de la vitesse du véhicule.

2. Capteur radar selon la revendication 1, le capteur radar possédant une zone d'unicité qui est élargie jusqu'au plus petit commun multiple de toutes les zones d'unicité des jeux de rampes individuels.

3. Système d'assistance à la conduite comprenant un capteur radar selon l'une des revendications 1 ou 2.

4. Véhicule automobile équipé d'un système d'assistance à la conduite selon la revendication 3.

5. Procédé pour faire fonctionner un capteur radar (1) dans un véhicule automobile, comprenant les étapes suivantes :

   émission (110) d'une séquence de signaux radar modulés à modulation de fréquence rapide ;
   réception (120) des échos radar des signaux radar à modulation de fréquence rapide émis, lesquels sont réfléchis par un objet (21, 22) ;
   acquisition (130) des échos radar reçus avec une fréquence d'échantillonnage prédéfinie ;
   les signaux radar modulés à modulation de fréquence rapide émis comprenant une pluralité de jeux de rampes ;
   chaque jeu de rampes présente une pluralité (L) de rampes de fréquence (R1, R2) ;
   chaque rampe de fréquence (R1, R2) d'un jeu de rampe présente une durée de rampe ($T_{fast,i}$) et une excursion de fréquence (F) ;
   deux rampes de fréquence (R1, R2) successives présentent une différence de temps ($T_{r2r,i}$) ; et
   deux jeux de rampes se différencient au moins par la durée de rampe ($T_{fast,i}$) ;

   **caractérisé en ce que**
   les signaux radar à modulation de fréquence rapide émis comprennent des jeux de rampes imbriqués les uns dans les autres,
   la fréquence d'échantillonnage prédéfinie est mise à varier pour chaque jeu de rampes, une fréquence d'échantillonnage individuelle étant sélectionnée pour chaque jeu de rampes et chaque rampe de fréquence (R1, R2) présentant un nombre égal de valeurs échantillonnées et
   les différences entre les durées de rampe ($T_{fast,i}$) est adaptée dynamiquement en fonction de la vitesse du véhicule.

6. Procédé selon la revendication 5, comprenant en outre les étapes suivantes :

   calcul (140) d'un spectre ($f_{x,max,1}$, $f_{x,max,2}$) séparé de l'écho radar acquis pour chacun de la pluralité de jeux de rampes :

      création (150) d'une suite périodique ($T_1 {*} f_{X,max,1}$, $T_2 {*} f_{x,max,2}$) des spectres ($f_{X,max,1}$, $f_{x,max,2}$) calculés dans la dimension de la distance et/ou de la vitesse ;
      détermination (160) d'une concordance d'un objet détecté dans les suites périodiques ($T_1 {*} f_{X,max,1}$, $T_2 {*} f_{X,max,2}$) des spectres ($f_{X,max,1}$, $f_{X,max,2}$) calculés.

7. Procédé selon la revendication 6, l'étape (150) de création (150) des suites périodiques ($T_1 {*} f_{X,max,1}$, $T_2 {*} f_{X,max,2}$) élargissant les spectres ($f_{X,max,1}$, $f_{X,max,2}$) calculés jusqu'au plus petit commun multiple de toutes les zones d'unicité des jeux de rampes.

8. Procédé selon la revendication 6 ou 7, l'étape (160) de détermination d'une concordance formant une fonction de coût et définissant un minimum de la fonction de coût en vue de déterminer la concordance.

Fig. 1

Fig. 2

Fig. 3

Fig. 4

Fig. 5

100

110

120

130

140

150

160

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009057191 A1
- DE 102006020943 A1
- JP 2004151022 A
- US 2012092209 A1
- US 4302758 A